# FASCICULE DE BREVET EUROPEEN

(11) **EP 0 999 402 B1**
(45) Date de publication et mention de la délivrance du brevet: **08.07.2009**
(21) Numéro de dépôt: 99402685.4
(22) Date de dépôt: 28.10.1999
(51) Int. Cl.: F17C 13/02, F17C 5/00, F17C 7/00, F17C 9/00

(54) **Dispositif de raccordement et de transfert d'un fluide entre un réservoir donneur et un réservoir receveur**
Anschluss- und Übertragungsvorrichtung einer Flüssigkeit von einem Geberbehälter zu einem Empfängerbehälter
Device for the connection and transfer of a fluid between a donor tank and a receiver tank

(30) Priorité: 06.11.1998 FR 9814024
(43) Date de publication de la demande: 10.05.2000
(73) Titulaire: L'AIR LIQUIDE, Société Anonyme pour l'Etude et l'Exploitation des Procédés Georges Claude, 75007 Paris (FR)
(72) Inventeur: Mayzou, Jean, 44160 Pont Château (FR); Jullien, Paul, 97310 Kourou (GY); Marnas, Pierre, 97310 Kourou (GY); Wallez, Robert, 92260 Fontenay-aux-Roses (FR)
(74) Mandataire: Pittis, Olivier

(56) Documents cités:
- EP-A- 0 463 265
- FR-A- 2 219 373
- US-A- 4 856 284
- US-A- 5 495 875
- US-A- 5 681 613

## Description

La présente invention concerne un procédé de transfert de fluide, en particulier de fluide cryogénique, entre au moins un réservoir donneur, tel un réservoir de stockage, et un camion citerne mobile.

Il est connu que le transfert d'un fluide, notamment d'un fluide cryogénique, tel l'azote, entre un réservoir donneur et un réservoir récepteur est susceptible d'engendrer une pollution plus ou moins importante du fluide ainsi transféré par des impureté susceptibles de se trouver dans les moyens de raccordement reliant les deux réservoirs, et tels les canalisations et autres flexibles de raccordement,

Pour des raisons d'assurance qualité, il est souhaitable de pouvoir minimiser la pollution du fluide transféré par de telles impuretés, en particulier lorsque le fluide est destiné à des applications nécessitant un fluide de haute pureté, par exemple de l'azote ultra pur destiné à être utilisé dans le domaine électronique.

Le document US-A-4,856,284 enseigne un procédé de transfert cryogénique d'un réservoir donneur à un réservoir receveur dans lequel est mis en oeuvre un procédé de purge à contre-courant du réservoir receveur. Au cours de cette purge un analyseur, raccordé entre le réservoir donneur et la mise à l'atmosphère, permet de détecter la présence de contaminants éventuels.

Le document US-A-5,495,875 divulgue, quant à lui, un système de remplissage d'une pluralité de containeurs avec une concentration précise d'un composant liquide. Aussi un tel système met en oeuvre un moyen de contrôle permanent de la concentration dudit composant dans le mélange final. Cependant, aucun analyseur ne semble détecter la présence de contaminants éventuels dans la ligne de transfert.

Par ailleurs, le document EP-A-0,463,265 enseigne un procédé de distribution d'un mélange gazeux dans des proportions exactement requises, à partir de stockage distincts des dits constituants à l'état liquide. Ce procédé comprend, en outre, un prélèvement d'analyse sur le débit de mélange à l'état liquide et une détermination de la teneur réelle d'au moins un constituant.

Enfin, le document FR-A-2,219,373 enseigne un procédé de mélanges de gaz d'étalonnage, dans lequel on met en oeuvre, en outre, une purge d'au moins une partie de la ligne de transfert dans le sens réservoir donneur - réservoir receveur.

Le but de la présente invention est alors de proposer un procédé permettant de garantir une contamination minimale d'un fluide lors de son transfert d'un réservoir donneur à un camion citerne mobile, en particulier un fluide cryogénique, tel l'azote.

L'invention concerne, alors, un procédé de purge d'au moins une partie d'une ligne de transfert de fluide reliant au moins un réservoir donneur à au moins un camion citerne mobile, ladite ligne de transfert comprenant au moins un raccord avec une vanne de mise à l'air et un analyseur raccordé à la ligne de transfert entre la vanne de mise à l'air et un premier organe de raccordement de la ligne de transfert au camion citerne mobile, comprenant au moins :
- une étape de purge à contre-courant de la ligne de transfert située entre la vanne de contrôle (VI) et les moyens de raccordement (3) à l'aide d'un fluide de purge issu du réservoir récepteur ; et,
- une étape de détermination de la teneur en au moins une impureté du fluide de purge circulant dans au moins une partie de la ligne de transfert.

Selon un autre aspect, l'invention concerne également un procédé de transfert d'un fluide cryogénique d'au moins un réservoir donneur vers au moins un camion citerne mobile, dans lequel on procède à une purge d'au moins une partie d'une ligne de transfert reliant lesdits réservoirs donneur et receveur selon un procédé de purge tel celui sus-décrit.

Selon le cas, le procédé de transfert selon l'invention peut comprendre l'une ou plusieurs des caractéristiques suivantes :
- on commence à réaliser le transfert de fluide cryogénique pour une pression du fluide de purge supérieure à un seuil de pression prédéterminé et/ou pour une teneur en impuretés du fluide de purge inférieure à un seuil d'impuretés prédéterminé; ledit seuil d'impuretés étant, en général, fonction de la nature du fluide et des spécifications à respecter, et peut varier par exemple de quelques ppm à quelques ppb;
- durant le transfert du fluide cryogénique, on détermine, de préférence en continu, la teneur en au moins une impureté du fluide cryogénique ainsi transféré ;
- ledit fluide cryogénique est choisi dans le groupe formé par les gaz rares, l'oxygène, l'hydrogène, le dioxyde de carbone, l'azote ou leurs mélanges ;
- les impuretés sont dans le groupe formé par le CO₂, le CO ou leurs mélanges ;
- le seuil de pression prédéterminé est d'au moins 2.10⁴ Pa environ.

Le procédé selon l'invention s'applique de préférence à un dispositif de raccordement d'au moins un réservoir donneur à au moins un camion citerne mobile pour le transfert d'un fluide dudit au moins un réservoir donneur audit au moins un camion citerne mobile comportant au moins une ligne de transfert de fluide comportant au moins un premier organe de raccordement audit réservoir receveur ; une vanne de mise à l'atmosphère raccordée à la ligne de transfert ; et un analyseur raccordé à la ligne de transfert.

Selon le cas, ce dispositif peut comprendre l'une ou plusieurs des caractéristiques suivantes :
- l'analyseur est raccordé à la ligne de transfert entre la vanne de mise à l'atmosphère et le premier organe de raccordement de la ligne de transfert ;
- l'analyseur et la vanne de mise à l'atmosphère sont raccordés par un raccord unique à la ligne de transfert ;
- au moins une vanne de contrôle de l'écoulement de fluide est agencée sur la ligne de transfert, de préférence ladite vanne de contrôle de l'écoulement de fluide est agencée entre le camion citerne mobile et la vanne de mise à l'atmosphère.

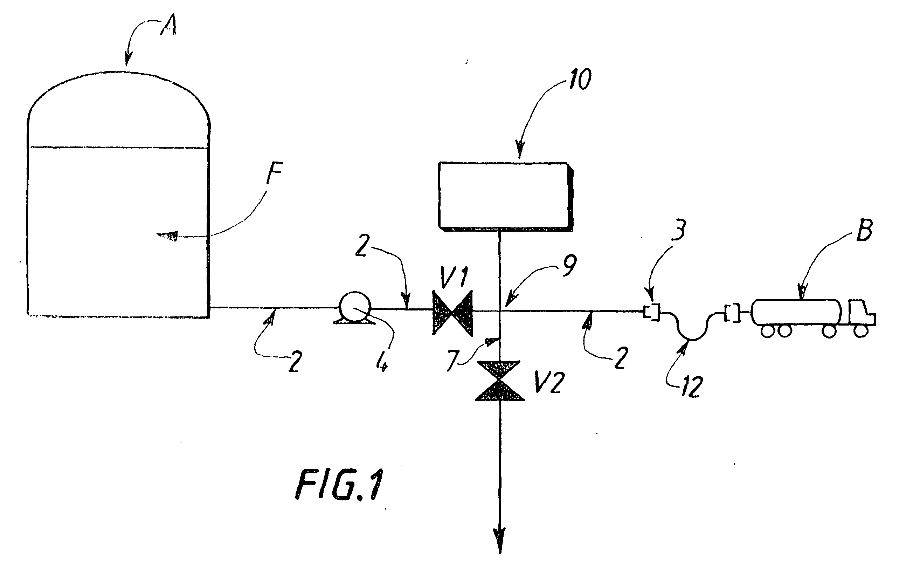

L'invention va maintenant être décrite plus en détail à l'aide de la figure annexée, donnée à titre illustratif mais non limitatif.

La figure annexée est une vue schématique d'un dispositif de raccordement pouvant être utilisé pour mettre en oeuvre le procédé selon la présente invention permettant de transférer un fluide cryogénique, par exemple de l'azote, entre un réservoir donneur A et un réservoir récepteur ou receveur B.

Dans ce cas, le réservoir donneur A est une citerne ou une capacité de stockage et le réservoir receveur B est un camion citerne mobile.

Le dispositif de raccordement comporte une ligne de transfert 2 reliant le réservoir donneur A au camion citerne mobile B, laquelle ligne de transfert comporte un compresseur 4, une vanne V₁ de contrôle de l'écoulement du fluide dans la ligne 2, une vanne V₂ de mise à l'atmosphère, et un organe 3 de raccordement de la ligne 2 au camion citerne mobile B directement ou indirectement, c'est-à-dire par l'intermédiaire d'un moyen de liaison, tel un flexible de raccordement 12.

La partie de la ligne 2 de transfert située entre la vanne V₁ et l'organe de raccordement 3 est appelée circuit de purge.

Lorsque l'on souhaite réaliser un transfert d'un fluide F contenu dans le réservoir donneur A vers le camion citerne mobile B, on réalise d'abord, selon l'invention, une purge de la partie de la ligne 2 de transfert située entre la vanne V₁ et les moyens de raccordement 3.

Pour ce faire, on procède à une purge par balayage gazeux à contre-courant de la partie de la ligne 2 de transfert à purger à l'aide du gaz résiduel contenu dans le camion citerne mobile B.

Le gaz résiduel contenu dans le réservoir récepteur B sort donc de ce réservoir B en s'écoulant par le flexible 12 et par le circuit de purge de la ligne 2 de transfert, avant d'être évacué à l'atmosphère par la vanne V₂ de mise à l'atmosphère qui est alors en position ouverte.

L'écoulement du gaz résiduel dans la ligne 2 de transfert entraîne un balayage gazeux de celle-ci et, par là même, une élimination efficace des impuretés susceptibles de s'y trouver.

Afin de garantir que la teneur en impuretés indésirables est minimale dans la ligne 2, un analyseur 10, raccordé à la ligne de transfert 2, suit en permanence l'évolution de la teneur en l'une ou plusieurs impuretés susceptibles d'être présentes à l'intérieur de la ligne 2 de transfert et/ou dans le flexible 12 de raccordement.

En fait, l'analyseur 10 suit, en permanence pendant le balayage gazeux, la teneur en impuretés du flux de gaz de purge circulant à contre-courant dans la ligne 2 de transfert entre l'organe 3 de raccordement et la vanne V₂ de mise à l'atmosphère.

Lorsque la teneur du gaz de purge en la ou lesdites impuretés devient inférieure à une valeur seuil prédéterminée, on arrête le balayage de purge, on ferme la vanne V₂ de mise à l'air, on ouvre la vanne V₁ pour permettre un écoulement du fluide depuis le réservoir donneur A jusque dans le réservoir récepteur B.

De préférence, après le balayage de purge, on ferme la vanne V₂, on ouvre la vanne V₁ et on réalise une analyse, préférentiellement en continu, du fluide circulant dans la ligne de transfert 2 pendant toute la durée dudit transfert. Ceci permet de garantir la qualité et la pureté du fluide envoyé et stocké dans le réservoir récepteur B.

Si nécessaire, pour faciliter l'écoulement du fluide à travers la ligne de transfert 2, il est souhaitable, voire dans certains cas nécessaire, de procéder à une recompression dudit fluide au moyen du compresseur 4 agencé sur la ligne 2 en amont de la vanne V₁.

En procédant à une purge de la ligne 2 de transfert et/ou du flexible 12 reliant les réservoirs, préalablement au début du transfert proprement dit de fluide, il est possible de minimiser la quantité d'impuretés indésirables incorporées au fluide durant le transfert.

Le dispositif et le procédé selon l'invention sont applicables aux fluides cryogéniques sous forme liquide ou gazeuse, tels notamment l'oxygène, l'hydrogène, le dioxyde de carbone, l'azote, ou les gaz rares.

En outre, selon l'invention, afin de garantir une pureté élevée du gaz ou du fluide transféré, préalablement à la purge à contre-courant de la ligne de transfert 2 à l'aide du fluide de purge issu du réservoir receveur B, on opère avantageusement à
- d'une part, une détermination de la teneur en impuretés dudit fluide de purge contenu dans le réservoir receveur B, et à une comparaison de la valeur de teneur en impuretés dudit fluide de purge ainsi déterminée avec une valeur de pureté-seuil préfixée ; et
- d'autre part, à une détermination de la pression dudit fluide de purge contenu dans le réservoir receveur B et à une comparaison de la valeur de pression ainsi déterminée avec une valeur de pression-seuil préfixée.

Ensuite, on commence la purge à contre-courant de la ligne de transfert 2 à l'aide du fluide de purge issu du réservoir receveur B, seulement si la valeur de teneur en impuretés dudit fluide de purge est inférieure à la valeur de pureté-seuil préfixée, par exemple une impureté telle que l'azote, l'oxygène ou l'argon, selon le cas, et/ou seulement si la valeur de pression déterminée est supérieure ou égale une valeur de pression-seuil préfixée, par exemple un pression minimale de 0.2 bar, de manière à vérifier que le réservoir B, par exemple un camion-citerne, a bien conservé une atmosphère résiduelle de fluide utilisable pour la purge, c'est-à-dire qu'il n'a pas été pollué par des entrées d'air atmosphérique.

De préférence, on contrôle à la fois la pression et la teneur en impuretés du gaz ou fluide contenu dans le réservoir B servant à la purge. Dans ce cas, seule une conformité simultanée de ces deux paramètres autorise la mise en fonctionnement de la pompe de transfert de fluide.

De préférence, on utilise un même analyseur pour contrôler la qualité du gaz de purge et réaliser ensuite la qualité du gaz transféré depuis le réservoir donneur jusqu'au camion citerne, et ce jusqu'à la fin du remplissage.

Avantageusement, en dehors des séquences de chargement, l'analyseur mesure, de préférence en permanence, la qualité du produit contenu dans le réservoir de stockage.

Le procédé selon l'invention est, en outre, particulièrement avantageux car il évite de réaliser des contrôles qualité après chargement du fluide, c'est-à-dire qu'il engendre ainsi une diminution notables des coûts de chargement.

## Revendications

1. Procédé de purge d'au moins une partie d'une ligne de transfert (2) de fluide reliant au moins un réservoir donneur (A) à au moins un camion citerne mobile (B), ladite ligne de transfert (2) comprenant une vanne (V₂) de mise à l'atmosphère et une vanne de contrôle (V₁), et un premier organe (3) de raccordement audit camion citerne mobile (B), et un analyseur raccordé à la ligne de transfert (2) entre la vanne (V₂) de mise à l'air et le premier organe de raccordement (3) de la ligne de transfert (2) comprenant au moins :
- une purge a contre-courant de ia ligne de transfert (2) située entre la vanne de contrôle (V₁) et les moyens de raccordement (3) à l'aide d'un fluide de purge issu du camion citerne mobile (B); et,
- une détermination de la teneur en au moins une impureté dans le fluide de purge circulant dans au moins une partie de ladite ligne de transfert (2).

2. Procédé de transfert d'un fluide cryogénique d'au moins un réservoir donneur (A) vers au moins un camion citerne mobile (B) dans lequel on procède à une purge d'au moins une partie d'une ligne de transfert (2) reliant ledit réservoir donneur (A) et le camion citerne (B) selon un procédé de purge selon la revendication 1.

3. Procédé de transfert selon la revendication 2 **caractérisé en ce qu'**on opère le transfert de fluide cryogénique après la purge de la ligne de transfert (2).

4. Procédé selon la revendication 3 **caractérisé en ce qu'**on commence à réaliser un transfert de fluide cryogénique pour une pression du fluide de purge supérieure à un seuil de pression prédéterminé et/ou pour une teneur en impuretés du fluide de purge inférieure à un seuil d'impuretés prédéterminé.

5. Procédé selon l'une des revendications 2 à 4 **caractérisé en ce que,** pendant le transfert du fluide cryogénique, on détermine, de préférence en continu, la teneur en au moins une impureté du fluide cryogénique ainsi transféré.

6. Procédé selon l'une des revendications 2 à 5 **caractérisé en ce que** ledit fluide cryogénique est choisi dans le groupe formé par les gaz rares, l'oxygène, l'hydrogène, le dioxyde de carbone, l'azote ou leurs mélanges.

7. Procédé selon l'une des revendications 2 à 6 **caractérisé en ce que** les impuretés sont dans le groupe formé par le CO₂, le CO ou leurs mélanges.

8. Procédé selon l'une des revendications 3 à 7 **caractérisé en ce que** le seuil de pression prédéterminé est d'au moins 2.10⁴ Pa.

9. Procédé selon l'une des revendications 3 à 8 **caractérisé en ce que,** préalablement à la purge à contre-courant de la ligne de transfert (2) à l'aide du fluide de purge issu du camion citerne mobile (B), on opère :
- une détermination de la teneur en l'une au moins desdites impuretés dudit fluide de purge contenu dans le camion citerne mobile (B), et
- une comparaison de la valeur de teneur en au moins une desdites impuretés dudit fluide de purge ainsi déterminée avec une valeur de pureté-seuil préfixée.

10. Procédé selon l'une des revendications 3 à 9 **caractérisé en ce que,** préalablement à la purge à contre-courant de la ligne de transfert (2) à l'aide du fluide de purge issu du camion citerne mobile (B), on opère :
- une détermination de la pression dudit fluide de purge contenu dans le réservoir receveur (B), et
- une comparaison de la valeur de pression ainsi déterminée avec une valeur de pression-seuil préfixée.

11. Procédé selon l'une des revendications 9 ou 10 **caractérisé en ce qu'**on effectue la purge à contre-courant de la ligne de transfert (2) à l'aide du fluide de purge issu du camion citerne mobile (B), lorsque la valeur de teneur en au moins une desdits impuretés dudit fluide de purge est inférieure à la valeur de pureté-seuil préfixée et/ou lorsque la valeur de pression déterminée est supérieure ou égale une valeur de pression-seuil préfixée.

## Claims

1. Method for purging at least part of a fluid transfer line (2) connecting at least one donor reservoir (A) to at least one mobile tanker (B), said transfer line (2) comprising a blowoff valve (V₂) and a control valve (V₁) and a first member (3) for connection to said mobile tanker (B), and an analyser connected to the transfer line (2) between the aeration valve (V₂) and the first connecting member (3) of the transfer line (2), comprising at least:
- a countercurrent purging of the transfer line (2) situated between the control valve (V₁) and the connecting means (3) using a purging fluid coming from the mobile tanker (B); and
- a determination of the content of at least one impurity in the purging fluid flowing in at least part of said transfer line (2).

2. Method for transferring a cryogenic fluid from at least one donor reservoir (A) to at least one mobile tanker (B) in which purging of at least part of a transfer line (2) connecting said donor reservoir (A) and the mobile tanker (B) is carried out according to a purging method according to Claim 1.

3. Transfer method according to Claim 2, **characterized in that** the transfer of cryogenic fluid is effected after the purging of the transfer line (2).

4. Method according to Claim 3, **characterized in that** a transfer of cryogenic fluid is carried out for a purging fluid pressure greater than a predetermined pressure threshold and/or for an impurity content of the purging fluid less than a predetermined impurity threshold.

5. Method according to one of Claims 2 to 4, **characterized in that** during the transfer of cryogenic fluid the content of at least one impurity of the cryogenic fluid thus transferred is determined, preferably continuously.

6. Method according to one of Claims 2 to 5, **characterized in that** said cryogenic fluid is chosen from the group formed by the noble gases, oxygen, hydrogen, carbon dioxide, nitrogen or their mixtures.

7. Method according to one of Claims 2 to 6, **characterized in that t**he impurities are in the group formed by CO₂, CO or their mixtures.

8. Method according to one of Claims 3 to 7, **characterized in that** the predetermined pressure threshold is at least 2×10⁴ Pa.

9. Method according to one of Claims 3 to 8, **characterized in that** before the countercurrent purging of the transfer line (2) using the purging fluid coming from the mobile tanker (B):
- the content of at least one of said impurities of said purging fluid contained in the mobile tanker (B) is determined; and
- the value of the content of at least one of said impurities of said purging fluid thus determined is compared with a preset purity threshold value.

10. Method according to one of Claims 3 to 9, **characterized in that** before the countercurrent purging of the transfer line (2) using the purging fluid coming from the mobile tanker (B):
- the pressure of said purging fluid contained in the mobile tanker (B) is determined; and
- the value of the pressure thus determined is compared with a preset pressure threshold value.

11. Method according to either of Claims 9 or 10, **characterized in that** a countercurrent purging of the transfer line (2) is carried out using the purging fluid coming from the mobile tanker (B) when the value of the content of at least one of said impurities of said purging fluid is less than the preset purity threshold value and/or when the determined pressure value is greater than or equal to a preset pressure threshold value.

## Patentansprüche

1. Verfahren zum Spülen mindestens eines Teils einer Fluidübertragungsleitung (2), die mindestens einen Gebertank (A) mit mindestens einem mobilen Tankwagen (B) verbindet, wobei die Übertragungsleitung (2) ein Belüftungsventil (V2) und ein Regelventil (V1) und ein erstes Anschlussorgan (3) an den mobilen Tankwagen (B) und ein Analysegerät aufweist, das an die Übertragungsleitung (2) zwischen dem Belüftungsventil (V2) und dem ersten Anschlussorgan (3) der Übertragungsleitung (2) angeschlossen ist, das mindestens enthält:
- ein Gegenstromspülen der Übertragungsleitung (2) zwischen dem Regelventil (V1) und den Anschlusseinrichtungen (3) mit Hilfe eines Spülfluids, das vom mobilen Tankwagen (B) stammt, und
- eine Bestimmung des Gehalts an mindestens einer Verunreinigung im Spülfluid, das in mindestens einem Teil der Übertragungsleitung (2) fließt.

2. Verfahren zur Übertragung eines Kryofluids von mindestens einem Gebertank (A) zu mindestens einem mobilen Tankwagen (B), bei dem ein Spülen mindestens eines Teils einer Übertragungsleitung (2), die den Gebertank (A) mit dem mobilen Tankwagen (B) verbindet, gemäß einem Spülverfahren nach Anspruch 1 durchgeführt wird.

3. Übertragungsverfahren nach Anspruch 2, **dadurch gekennzeichnet, dass** die Übertragung von Kryofluid nach dem Spülen der Übertragungsleitung (2) durchgeführt wird.

4. Verfahren nach Anspruch 3, **dadurch gekennzeichnet, dass** mit einer Übertragung von Kryofluid bei einem Druck des Spülfluids höher als ein vorbestimmter Druck-Schwellwert und/oder bei einem Gehalt an Verunreinigungen im Spülfluid geringer als ein vorbestimmter Schwellwert von Verunreinigungen begonnen wird.

5. Verfahren nach einem der Ansprüche 2 bis 4, **dadurch gekennzeichnet, dass** während der Übertragung des Kryofluids der Gehalt an mindestens einer Verunreinigung im so übertragenen Kryofluid vorzugsweise durchgehend bestimmt wird.

6. Verfahren nach einem der Ansprüche 2 bis 5, **dadurch gekennzeichnet, dass** das Kryofluid aus der Gruppe ausgewählt wird, die von den Edelgasen, Sauerstoff, Wasserstoff, Kohlendioxid, Stickstoff oder ihren Mischungen gebildet wird.

7. Verfahren nach einem der Ansprüche 2 bis 6, **dadurch gekennzeichnet, dass** die Verunreinigungen sich in der Gruppe befinden, die von CO₂, CO oder ihren Mischungen gebildet wird.

8. Verfahren nach einem der Ansprüche 3 bis 7, **dadurch gekennzeichnet, dass** der vorbestimmte Druck-Schwellwert mindestens 2.10⁴ Pa beträgt.

9. Verfahren nach einem der Ansprüche 3 bis 8, **dadurch gekennzeichnet, dass** vor dem Gegenstromspülen der Übertragungsleitung (2) mit Hilfe des vom mobilen Tankwagen (B) stammenden Spülfluids durchgeführt wird:
- eine Bestimmung des Gehalts an mindestens einer der Verunreinigungen in dem im mobilen Tankwagen (B) enthaltenen Spülfluid, und
- ein Vergleich des so bestimmten Werts des Gehalts an mindestens einer der Verunreinigungen im Spülfluid mit einem vorab festgelegten Reinheits-Schwellwert.

10. Verfahren nach einem der Ansprüche 3 bis 9, **dadurch gekennzeichnet, dass** vor dem Gegenstromspülen der Übertragungsleitung (2) mit Hilfe des vom mobilen Tankwagen (B) stammenden Spülfluids durchgeführt wird:
- eine Bestimmung des Drucks des im mobilen Tankwagen (B) enthaltenen Spülfluids, und
- ein Vergleich des so bestimmten Druckwerts mit einem vorab festgelegten Druck-Schwellwert.

11. Verfahren nach einem der Ansprüche 9 oder 10, **dadurch gekennzeichnet, dass** das Gegenstromspülen der Übertragungsleitung (2) mit Hilfe des vom mobilen Tankwagen (B) stammenden Spülfluids durchgeführt wird, wenn der Wert des Gehalts an mindestens einer der Verunreinigungen im Spülfluid geringer ist als der vorab festgelegte Reinheits-Schwellwert und/oder wenn der bestimmte Druckwert größer als ein oder gleich einem vorab festgelegten Druck-Schwellwert ist.
